# EUROPÄISCHE PATENTSCHRIFT

(11) **EP 0 287 994 B1**
(45) Veröffentlichungstag und Bekanntmachung des Hinweises auf die Patenterteilung: **02.06.1993**
(21) Anmeldenummer: 88106151.9
(22) Anmeldetag: 18.04.1988
(51) Int. Cl.: F24F 5/00, F24D 13/02, E06B 7/28

(54) **Beheizbares Fensterfassadenelement**
Heatable window façade element
Elément de façade de fenêtre chauffable

(30) Priorität: 24.04.1987 CH 1578/87
(43) Veröffentlichungstag der Anmeldung: 26.10.1988
(73) Patentinhaber: CONSTRAL AG, CH-8570 Weinfelden (CH)
(72) Erfinder: Widmer, Noah, CH-8570 Weinfelden (CH); Seravalli, Alexandre, CH-2740 Moutier (CH); Neukomm, Yvan, CH-8562 Märstetten (CH)
(74) Vertreter: Blum, Rudolf Emil Ernst

(56) Entgegenhaltungen:
- WO-A-85/02649
- DE-A- 1 659 222
- DE-A- 2 706 968
- DE-A- 2 834 062
- DE-A- 3 425 047
- FR-A- 1 264 475

## Beschreibung

Die vorliegende Erfindung bezieht sich auf ein Fensterelement für eine Gebäudefassade mit einem Rahmen und mehreren hintereinandergelagerten Scheiben, wobei die Innenscheibe beheizbar ist.

Als Teile von Gebäudeaussenhüllen kommt den Fensterflächen eine zentrale Bedeutung zu. Sie erfüllen eine beleuchtungstechnische Funktion, indem Sonne und Licht eingelassen werden; sie stellen eine optische Verbindung zwischen der Aussenwelt und dem Gebäudeinnern dar und dienen nicht zuletzt der Lüftung des Gebäudes. Auf der anderen Seite werden Fenster häufig als "Schwachstelle" des Gebäudes bezeichnet, gilt es doch zu verhindern, dass im Winter Heizenergie durch die Fensterflächen verloren geht, dass es umgekehrt im Sommer durch Sonnenstrahlung im Gebäudeinnern unerträglich heiss wird, und dass Aussenlärm in unangenehmem Ausmass in das Gebäude dringt.

Herkömmliche Fensterelemente weisen zur Isolation mehrere hintereinandergelagerte Scheiben auf und sind vor allem bei grösseren Gebäuden fest verschlossen, wobei das Innenklima des Gebäudes durch raumseitige Heizungs- und Lüftungsvorrichtungen geregelt wird.

Der Wärmedämmwert solcher Fenster, ausgedrückt durch den Wärmedurchgangskoeffizienten (K-Wert), liegt weit unterhalb desjenigen der übrigen Gebäudefassade. Der Energietransport durch Fensterflächen geschieht infolge von Temperaturdifferenzen zwischen Innen- und Aussenklima sowie infolge von Sonneneinstrahlung.

Der K-Wert ist jedoch keine gegebene Konstante, sondern abhängig von einer Vielzahl von Faktoren, welche durch bautechnische und bauphysikalische Massnahmen beeinflusst werden können.

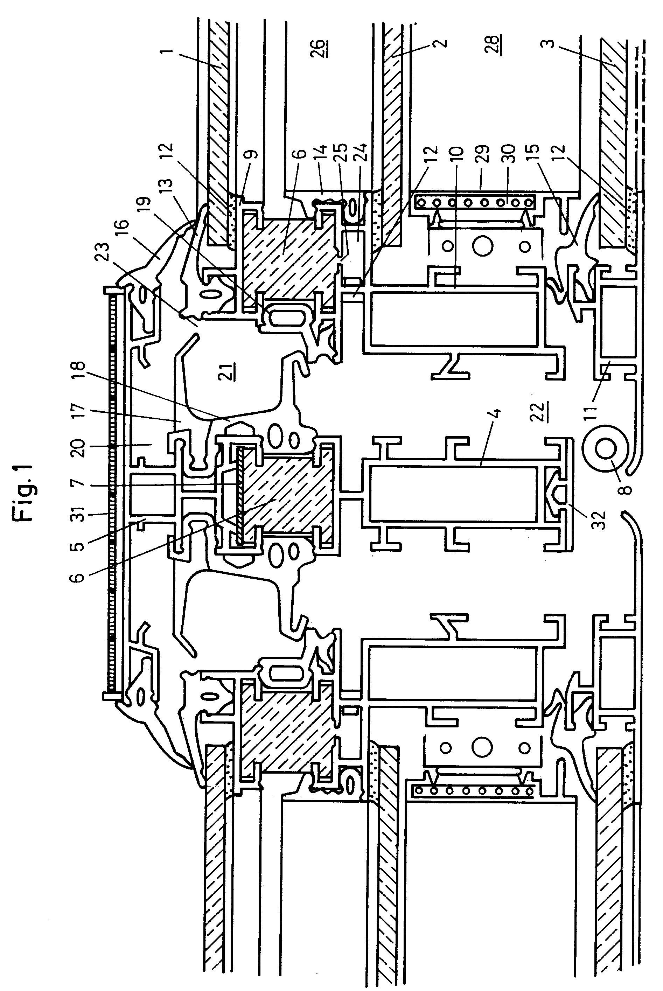

Es ist bereits vorgeschlagen worden, Fensterelemente zu beheizen. So sind in der französischen Patentschrift Nr. 1 264 475 (Fig. 1; Fig. 6) doppelt und dreifach verglaste Fenster dargestellt, wobei jeweils die innerste Scheibe beheizbar ist. Dasselbe gilt für die Publikation WO 85/02649 und die beiden deutschen Offenlegungsschriften Nr. 1 659 222 und Nr. 27 06 968.

Bei allen diesen Lösungen besitzen die Rahmen, in denen die Scheiben gehalten sind, jedoch keinen thermisch getrennten Profilaufbau.

Die zwei weiteren deutschen Offenlegungsschriften Nr. 28 34 062 und Nr. 34 25 047 zeigen anderseits spezielle Flügelrahmenkonstruktionen für mehrfach verglaste Fenster mit thermischer Isolation zwischen inneren und äusseren Rahmenteilen, wobei jedoch keine Beheizung der Fenster vorgesehen ist.

Die vorliegende Erfindung hat sich die Aufgabe gestellt, gerade die "Schwachstelle" Fenster als Teil der Gebäudeaussenhülle zur Regulierung der Energiebilanz zu benutzen.

Diese Aufgabe wird durch die kennzeichnenden Merkmale des Patentanspruchs 1 gelöst.

Der wesentliche Vorteil dieser Erfindung liegt darin, dass durch die Beheizung der raumseitigen Scheibe eine thermische Sperre zwischen der zirkulierenden Raumluftmasse einerseits und der Aussenluft andererseits entsteht, wodurch der K-Wert der Fensterfläche erheblich verbessert wird. Durch die Erwärmung des an diese Scheibe angrenzenden Scheibenzwischenraums wird der diesen Zwischenraum abschliessende Rahmen erwärmt, was bei thermischer Entkopplung zwischen Rahmeninnen- und -aussenschale zu einer weiteren Verbesserung des K-Wertes beiträgt.

Bei einer bevorzugten Ausführung kann zudem auf die herkömmliche Beheizung des Gebäudes mittels Grundlastheizung und Lüftungsvorrichtungen verzichtet werden, indem die Beheizung ausschliesslich über die Fensterflächen erfolgt.

Im folgenden soll eine bevorzugte Ausführung der Erfindung anhand von Zeichnungen erläutert werden. Dabei zeigt
Figur 1 einen Horizontalschnitt durch ein dreifachverglastes Fensterelement und
Figur 2 einen Vertikalschnitt durch den Brüstungsteil desselben Fensterelementes.

Figur 1 zeigt ein dreifachverglastes Fenster mit einer Aussenscheibe 1, einer Mittelscheibe 2 und einer Innenscheibe 3. Der Rahmen besteht aus einem tragenden und einem beweglichen Teil. Der tragende Teil besteht aus einer inneren Rahmenschale 4 und einer äusseren Rahmenschale 5, welche mechanisch mittels thermisch isolierender Verbindungselemente 6 (z.B. Glasfasermaterial) miteinander verbunden sind. Den Verbindungselementen 6 vorgelagert ist ein durchgehender Strahlungsisolierstreifen 7.

Der bewegliche Teil des Rahmens ist um eine Achse 8 dreh- oder kippbar gelagert. Er besteht aus einem ersten, die Aussenscheibe 1 tragenden Flügelrahmenprofil 9, welches mit einem die Mittelscheibe 2 tragenden zweiten Flügelrahmenprofil 10 wiederum über thermisch isolierende Verbindungselemente 6 mechanisch verbunden ist. Ein drittes Flügelrahmenprofil 11 trägt die Innenscheibe 3 und bildet so einen auch unabhängig öffenbaren Sekundärflügel.

Die Scheiben 1,2,3 sind durch Verklebungen 12 mit den zugehörigen Flügelrahmenprofilen 9,10,11 haftfest, luft- und thermodicht verbunden. Die Verklebung übernimmt gleichzeitig die Funktion eines Schalldämpfers. Mit dieser Glaseinsatztechnik kann - im Unterschied zur herkömmlichen Isolierverglasung - bei Bruchersatz jede Scheibe einzeln ausgetauscht werden.

Die Klebeflächen werden durch umlaufende Gummiprofile 13,14,15 gegen UV-Strahlen abgedeckt. Die Gummiprofile 13,14,15 übernehmen beim Glasklebeprozess die Fixation der Scheiben 1,2,3. Das Gummiprofil 14 dient gleichzeitig als dampfdichte Flügelmitteldichtung, deren Ecken dampfdicht verklebt sind. Das Gummiprofil 13 ist eckvulkanisiert und weist eine Vorspannung auf, so dass die mechanische Sicherung der Aussenscheibe 1 auch bei Haftverlust der Verklebung 12 gewährleistet ist. Zur Aussenabdichtung der Fensterflächen wird ein das Gummiprofil 13 überlappendes, umlaufendes, eckvulkanisiertes Gummiprofil 16 verwendet.

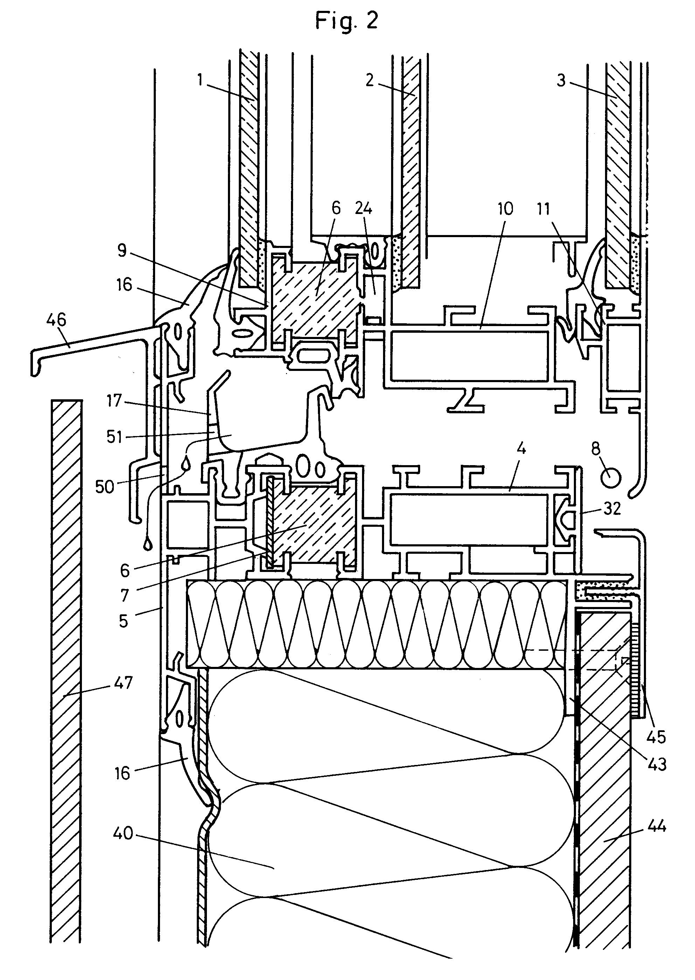

Zwischen dem tragenden und dem beweglichen Teil des Fensterrahmens befinden sich drei durch entsprechend geformte Gummiprofile 17,18,19 abgetrennte Zonen: Eine Schlagregen-Dichtzone 20, bei der in allen vier Ecken des Rahmens Abflusslöcher 50 vorgesehen sind (vgl. Figur 2), eine thermische Zone, die als stationäre Luftkammer 21 ausgebildet ist und gegen die Schlagregen-Dichtzone 20 eine umlaufende Oeffnung 23 aufweist, so dass eingedrungenes Wasser jederzeit gegen aussen ablaufen kann, wobei das Gummiprofil 17 längs der unteren Rahmenseite zusätzlich Abflussöffnungen 51 aufweist (vgl. Fig. 2) sowie eine raumseitig offene Umlüftungszone 22 zum Ausgleich der Strahlungstemperatur.

Das zweite Flügelrahmenprofil 10 enthält eine umlaufende Hohlkammer 24, die über eine umlaufende Schlitzöffnung 25 mit einer zwischen der Aussenscheibe 1 und der Mittelscheibe 2 liegenden Isolierzone 26 in Verbindung steht. Die Hohlkammer 24 enthält ein Entfeuchtungsmittel, das über Entsorgungsventile 27 ausgetauscht werden kann.

Ueber dieselben Entsorgungsventile 27 ist es möglich, die Isolierzone 26 - unter Umständen erst nachträglich - mit einer wärmedämmenden Gasfüllung zu versehen.

Ein durch die Mittelscheibe 2 und die Innenscheibe 3 gebildeter Zwischenraum 28 enthält auf ein Tragprofil 29 verdeckt montierte elektrische Heizelemente 30, mittels welcher der Zwischenraum 28 in Abhängigkeit der Aussen-und Innentemperatur sowie der Sonneneinstrahlung beheizt werden kann. Die Innenscheibe 3 kann zusätzlich ebenfalls Heizelemente 30 (in der Zeichnung nicht ersichtlich) enthalten, welche auf der Innenseite dieser Scheibe angebracht oder in die Scheibe eingelassen sind.

Die Heizelemente 30 können mittels Netzspannung (48-220 V), mittels Stationär-Solarstromanlagen oder mittels an der Aussenhaut des Gebäudes respektive der Fensterrahmen angebrachten Solarzellen 31 gespiesen werden. Durch die Kombination dieser Ressourcen ergibt sich einerseits eine kostengünstige Gesamtenergiekonzeption und andererseits der Vorteil des Einsatzes von voneinander unabhängigen Energiequellen, wobei das Energieangebot unter Umständen zusätzlich in Batterien gespeichert werden kann.

Die Rahmenkonstruktion ist so ausgelegt, dass sämtliche Beschläge und elektrischen Anschlüsse für die Heizelemente verdeckt angeordnet, nach Oeffnen des Fensterflügels jedoch leicht zugänglich sind. Zur zusätzlichen Abdeckung des Zwischenraums bei zwei aneinanderstossenden Fensterelementen wird die innere Rahmenschale 4 stirnseitig mit einem stossverklebten Gummiprofil 32 versehen. Sämtliche Gummiprofile 13,14,15,16,17,18,19,32 sind so ausgelegt, dass sie in Rollenform transportiert werden können.

Bei einer bevorzugten Ausführung des Fensterelementes werden die Heizelemente so konzipiert, dass auf eine zusätzliche Grundlastheizung herkömmlicher Art und auf spezielle Lüftungsvorrichtungen verzichtet werden kann, die Regulierung des Gebäudeklimas also ausschliesslich über die Fensterflächen erfolgt.

Die Regulierung der Wärmebilanz erfolgt erstens über Solarwärme durch Sonneneinstrahlung, wobei je nach Ausrichtung der Gebäudefassade das Fensterelement eine unterschiedliche Anzahl und Kombination von Scheibenarten (Floatglas, Sonnenschutzglas, Verspiegelungen) enthält, zweitens über Konvektions- und Strahlungswärme aus den integrierten Heizelementen 30, wobei die Wärmeabgabe sowohl über die Fläche der Scheiben 2 und 3 als auch über den thermisch entkoppelten Innenrahmen erfolgt und drittens über (in der Zeichnung nicht enthaltene) elektromechanische Einrichtungen, mittels welcher die Fensterflügel über eine zentrale Klima-Steuerung geöffnet werden können.

Die zentrale Klimasteuerung kann dabei als Einzelraumsteuerung oder Gesamtgebäudesteuerung ausgebildet sein und basiert einerseits auf Komfortvorgabewerten und andererseits auf aussen und innen am Gebäude angebrachten Strahlungs-Thermofühlern.

Für den Sommerbetrieb können die Fensterelemente, je nach Beschattungskonzept, zusätzlich mit wetter- oder raumseitigen Sonnenschutzanlagen oder Rollos mit Hand-oder Elektrobetrieb versehen werden.

Die Stromversorgungsmöglichkeiten für diese Steuerungselemente sind dieselben wie für die Heizelemente 30.

Das gesamte Fensterelement zeichnet sich - zusätzlich zu einem im Vergleich mit herkömmlicher Isolierverglasung erheblich verbessertem K-Wert - durch einen wirksamen Schallschutz aus. Die beschriebene Standardausführung bietet eine Schalldämpfung von ca. 42 dB. Durch die neuartige Rahmen- und Flügelkonstruktion wird auch bei leichter Oeffnung des Fensters zu Lüftungszwecken eine Schalldämpfung von ca. 35 dB erreicht, womit der Einsatz der erwähnten zentralen Klimasteuerung auch bei ungünstigen Aussenlärmbedingungen gewährleistet ist. Dadurch, dass die Fensterflügel völlig geöffnet werden können, ist es möglich, sämtliche Wartungs- und Reinigungsarbeiten von der Gebäudeinnenseite her vorzunehmen. Die bei der herkömmlichen Bauweise üblichen Aussenbefahranlagen sind überflüssig. Die Wartung der Heizelemente 30 ist problemlos, da die Innenscheibe 1 und der zugehörige Flügelprofilrahmen 11 als unabhängig zu öffnender Sekundärflügel ausgebildet sind.

Figur 2 zeigt einen Vertikalschnitt durch das in Figur 1 dargestellte Fensterelement und dessen Uebergang zu einer Brüstung 40. Die umlaufende Rahmenkonstruktion wird der Oberkante der Brüstung 40 angepasst und beidseitig über die Brüstung 40 hinuntergezogen 5,43. Wetterseitig wird der Abschluss durch das vorgespannte Gummiprofil 16 sichergestellt. Auf der Innenseite wird ein dampfdichtes Schild 44 mit der Brüstung 40 verschraubt. Den optischen Abschluss bildet auf der Innenseite ein horizontales Deckprofil 45.

Die wärmetechnischen und schalltechnischen Schichtaufbaumöglichkeiten der Brüstung 40 sind unbeschränkt und werden für die Raumkomfortverbesserung herangezogen.

Auf der Aussenseite ist ein horizontales Leitprofil 46 angebracht. Darunter und der Brüstung 40 vorgelagert befindet sich ein vorgehängtes hinterlüftetes Wetterschutzschild 47 (z.B. aus ESG-Glas, Blech, Naturstein usw.).

## Patentansprüche

1. Fensterelement für eine Gebäudefassade, mit einem Rahmen und mehreren hintereinandergelagerten Scheiben, wobei die Innenscheibe (3) beheizbar ist, dadurch gekennzeichnet, dass der Rahmen einen thermisch getrennten Profilaufbau aufweist, wobei der Rahmen aus einem tragenden und einem beweglichen Teil besteht und der tragende Teil eine innere und eine äussere Rahmenschale (4,5) aufweist, die mittels thermisch isolierender Verbindungselemente (6) miteinander verbunden sind, und der bewegliche Teil aus einem die äusseren Scheiben tragenden Hauptflügelrahmen und einem die Innenscheibe (3) tragenden Sekundärflügelrahmen gebildet ist und die Rahmenprofile (9,10) des Hauptflügelrahmens mittels thermisch isolierender Verbindungselemente (6) miteinander verbunden sind.

2. Fensterelement nach Anspruch 1, dadurch gekennzeichnet, dass die Beheizung der Innenscheibe (3) mittels im Scheibenzwischenraum (28) angebrachter Heizelemente (30) erfolgt.

3. Fensterelement nach Anspruch 1 oder 2, dadurch gekennzeichnet, dass die Beheizung der Innenscheibe (3) mittels an dieser Scheibe angebrachter oder in dieser Scheibe enthaltener Heizelemente erfolgt.

4. Fensterelement nach einem der Ansprüche 1 bis 3, dadurch gekennzeichnet, dass den mechanischen Verbindungselementen (6) auf ihrer Aussenseite ein durchgehender Strahlungsisolierstreifen (7) vorgelagert ist.

5. Fensterelement nach einem der Ansprüche 1 bis 4, dadurch gekennzeichnet, dass die mechanische Befestigung der Scheiben (1, 2, 3) in den Flügelrahmenprofilen (9, 10, 11) mittels Verklebungen (12) erfolgt.

6. Fensterelement nach Anspruch 5, dadurch gekennzeichnet, dass sämtliche Klebeflächen (12) durch umlaufende Gummiprofile (13, 14, 15) gegen UV-Strahlen abgedeckt sind.

7. Fensterelement nach einem der vorangehenden Ansprüche, dadurch gekennzeichnet, dass zur Aussendichtung des Fensterelementes zwei umlaufende, einander überlappende Gummiprofile (13, 16) vorgesehen sind.

8. Fensterelement nach einem der Ansprüche 5, 6 oder 7, dadurch gekennzeichnet, dass die Aussenscheibe (1) von einem umlaufenden Gummiprofil (13) umfasst ist, welches eine Vorspannung aufweist, so dass die mechanische Sicherung der Aussenscheibe (1) auch bei Haftverlust der Verklebung (12) gewährleistet ist.

9. Fensterelement nach einem der vorangehenden Ansprüche, dadurch gekennzeichnet, dass der Rahmen in eine äussere Schlagregen-Dichtzone (20), eine thermisch isolierende Zone (21) und eine raumseitig geöffnete Umlüftungszone (22) gegliedert ist.

10. Fensterelement nach Anspruch 9, dadurch gekennzeichnet, dass die erwähnten Zonen (20, 21, 22) durch umlaufende Gummiprofile (17, 18, 19) abgetrennt sind.

11. Fensterelement nach Anspruch 9 oder 10, dadurch gekennzeichnet, dass die thermisch isolierende Zone (21) als stationäre Luftkammer ausgebildet ist.

12. Fensterelement nach Anspruch 11, dadurch gekennzeichnet, dass die stationäre Luftkammer gegen die äussere Schlagregen-Dichtzone (20) eine umlaufende Schlitzöffnung (23) aufweist.

13. Fensterelement nach einem der vorangehenden Ansprüche, dadurch gekennzeichnet, dass der Rahmen eine umlaufende Hohlkammer (24) aufweist, welche über eine Schlitzöffnung (25) mit einem Scheibenzwischenraum (26) in Verbindung steht und ein Entfeuchtungsmittel enthält.

14. Fensterelement nach Anspruch 13, dadurch gekennzeichnet, dass die Hohlkammer (24) verschliessbare Entsorgungsöffnungen (27) aufweist, wodurch ein Austausch des Entfeuchtungsmittels möglich ist.

15. Fensterelement nach einem der vorangehenden Ansprüche, dadurch gekennzeichnet, dass dieses in einem Scheibenzwischenraum (26) ein wärmedämmendes Gas enthält.

16. Fensterelement nach den Ansprüchen 14 und 15, dadurch gekennzeichnet, dass das wärmedämmende Gas über die Entsorgungsöffnungen (27) in den Scheibenzwischenraum (26) eingebracht werden kann.

17. Fensterelement nach einem der vorangehenden Ansprüche, dadurch gekennzeichnet, dass an der Aussenseite des Rahmens Solarzellen (31) angeordnet sind.

18. Fensterelement nach Anspruch 17, dadurch gekennzeichnet, dass die Solarzellen (31) der Speisung der Scheibenbeheizung dienen.

19. Fensterelement nach einem der vorangehenden Ansprüche, dadurch gekennzeichnet, dass eine elektromechanische Vorrichtung und eine Steuerung vorgesehen sind, mittels welcher das Fenster geöffnet oder geschlossen werden kann.

20. Fensterelement nach Anspruch 19, dadurch gekennzeichnet, dass die Steuerung auf aussen und innen am Gebäude angebrachten Temperaturfühlern sowie definierbaren Komfortvorgabewerten beruht.

21. Fensterelement nach den Ansprüchen 1 bis 19, dadurch gekennzeichnet, dass die Regulierung des Gebäudeklimas ausschliesslich mittels der Scheibenheizung erfolgt.

## Claims

1. Window element for a facade of a building, with a frame and several panes supported consecutively, whereby the inner pane (3) is heatable, characterized in that the frame comprises a thermally separated profile structure, whereby the frame consists of a supporting and a movable part and the movable part includes an inner and an outer frame shell (4, 5), which are interconnected by thermally insulating connecting elements (6) and the movable part is formed of a main wing frame supporting the outer panes and a secondary wing frame supporting the inner pane (3) and the frame profiles (9, 10) of the main wing frame are connected to each other by thermally insulating connecting elements (6).

2. Window element according to claim 1, characterized in that the heating of the inner pane (3) proceeds by heating elements mounted in the panel interstice (30).

3. Window element according to claim 1 or 2, characterized in that the heating of the inner pane (3) proceeds by heating elements mounted to this pane or contained in this pane.

4. Window element according to one of the claims 1 to 3, characterized in that a continuous radiation insulating strip (7) is arranged ahead of the mechanical connecting elements (6) at their outer side.

5. Window element according to one of the claims 1 to 4, characterized in that the mechanical mounting of the panes (1, 2, 3) in the wing frame profiles (9, 10, 11) proceeds by bondings (12).

6. Window element according to claim 5, characterized in that all bonding surfaces (12) are covered against UV-rays by circumferentially extending rubber profiles (13, 14, 15).

7. Window element according to one of the preceding claims, characterized in that two circumferentially extending mutually overlapping rubber profiles (13, 16) are foreseen for the outer sealing of the window element.

8. Window element according to one of the claims 5, 6 or 7, characterized in that the outer pane (1) is encircled by a circumferentially extending rubber profile (13) which is prestressed such that the mechanical fastening of the outer pane (1) is also ensured in case of a loss of the adhering of the bonding (12).

9. Window element according to one of the preceding claims, characterized in that the frame is divided up into an outer pelting-rain sealing zone (20), a thermally insulating zone (21) and an aeration zone (22) open at the side of the room.

10. Window element according to claim 9, characterized in that mentioned zones (20, 21, 22) are separated by circumferentially extending rubber profiles (17, 18, 19).

11. Window element according to claims 9 or 10, characterized in that the thermally insulating zone (21) is designed as stationary air chamber.

12. Window element according to claim 11, characterized in that the stationary air chamber includes a circumferentially extending slotted opening (23) towards the outer pelting-rain sealing zone (20).

13. Window element according to one of the preceding claims, characterized in that the frame comprises a circumferentially extending hollow chamber (24) which communicates via a slotted opening (25) with a pane interstice (26) and contains a dehumidification agent.

14. Window element according to claim 13, characterized in that the hollow chamber (24) includes disposal openings (27) which can be closed such that an exchanging of the dehumidification agent is possible.

15. Window element according to one of the preceding claims, characterized in that it comprises a heat insulating gas in a pane interstice (26).

16. Window element according to claims 14 and 15, characterized in that the heat insulating gas can be fed into the pane interstice (26) via the disposal openings (27).

17. Window element according to one of the preceding claims, characterized in that solar cells (31) are arranged at the outer side of the frame.

18. Window element according to claim 17, characterized in that the solar cells (31) serve for the supply of the heating of the panes.

19. Window element according to one of the preceding claims, characterized in that an electromechanical device and a control are foreseen, by means of which the window can be opened or closed.

20. Window element according to claim 19, characterized in that the control is based on temperature feelers mounted outside and inside of the building and on definable comfort design values, as well.

21. Window element according to the claims 1 to 19, characterized in that the controlling of the climate of the building exclusively by means of the pane heating.

## Revendications

1. Elément de fenêtre pour une façade de bâtiment, comportant un châssis et plusieurs vitres montées l'une derrière l'autre, dans lequel la vitre interne (3) peut être chauffée, caractérisé en ce que le châssis présente une construction de profilé séparée thermiquement, le châssis étant constitué d'un élément porteur et d'un élément mobile et l'élément porteur présentant une coque de châssis interne et une externe (4, 5) qui sont reliées l'une à l'autre au moyen d'éléments de liaison (6) thermiquement isolants, et en ce que l'élément mobile est formé par un châssis de battant principal qui porte la vitre externe et par un châssis de battant secondaire qui porte la fenêtre interne (3), les profilés de châssis (9, 10) du châssis de battant principal étant reliés l'un à l'autre au moyen d'éléments de liaison (6) thermiquement isolés.

2. Elément de fenêtre suivant la revendication 1, caractérisé en ce que le chauffage de la vitre interne (3) a lieu au moyen d'éléments chauffants (30) montés dans l'espace intermédiaire (28) des vitres.

3. Elément de fenêtre suivant la revendication 1 ou 2, caractérisé en ce que le chauffage de la vitre interne (3) a lieu au moyen d'éléments chauffants montés sur cette vitre ou contenus dans cette vitre.

4. Elément de fenêtre suivant l'une des revendications 1 à 3, caractérisé en ce qu'une bande isolant du rayonnement (7) continue est montée avant les éléments de liaison (6) mécaniques, sur leur côté externe.

5. Elément de fenêtre suivant l'une des revendications 1 à 4, caractérisé en ce que la fixation mécanique des vitres (1, 2, 3) a lieu dans les profilés de châssis de battant (9, 10, 11) au moyen de collages (12).

6. Elément de fenêtre suivant la revendication 5, caractérisé en ce que toutes les faces de collage (12) sont recouvertes à l'encontre de rayons UV par des profilés périphériques en caoutchouc (13, 14, 15).

7. Elément de fenêtre suivant l'une des revendications précédentes, caractérisé en ce que deux profilés périphériques en caoutchouc (13, 16), qui se chevauchent l'un l'autre sont prévus pour l'étanchéité externe de l'élément de fenêtre.

8. Elément de fenêtre suivant l'une des revendications 7, 5, 6 ou 7, caractérisé en ce que la vitre externe (1) est entourée par un profilé périphérique en caoutchouc (13) qui présente une précontrainte de sorte que la fixation mécanique de la vitre externe (1) soit assurée aussi dans le cas d'une perte d'adhérence du collage (12).

9. Elément de fenêtre suivant l'une des revendications précédentes, caractérisé en ce que le châssis est divisé en une zone externe d'étanchéité à la pluie battante (20), une zone thermiquement isolante (21) et une zone à circulation d'air (22) ouverte du côté du local.

10. Elément de fenêtre suivant la revendication 9, caractérisé en ce que les zones mentionnées (20, 21, 22) sont séparées par des profilés périphériques en caoutchouc (17, 18, 19).

11. Elément de fenêtre suivant la revendication 9 ou 10, caractérisé en ce que la zone thermiquement isolante (21) est réalisée sous la forme d'une chambre d'air stationnaire.

12. Elément de fenêtre suivant la revendication 11, caractérisé en ce que la chambre d'air stationnaire présente à l'opposé de la zone externe d'étanchéité à la pluie battante (20) une ouverture d'interstice périphérique (23).

13. Elément de fenêtre suivant l'une des revendications précédentes, caractérisé en ce que le châssis présente une chambre creuse périphérique (24) qui est en liaison par l'intermédiaire d'une ouverture d'interstice (25) avec l'espace intermédiaire des vitres (26) et qui contient un produit de dessiccation.

14. Elément de fenêtre suivant la revendication 13, caractérisé en ce que la chambre creuse (24) présente des ouvertures d'évacuation (27) qui peuvent être fermées, un échange du produit de dessiccation étant possible par cela.

15. Elément de fenêtre suivant l'une des revendications précédentes, caractérisé en ce que celui-ci comporte dans un espace intermédiaire des vitres (26) un gaz isolant calorifuge.

16. Elément de fenêtre suivant l'une des revendications 14 et 15, caractérisé en ce que le gaz isolant calorifuge peut être introduit par les ouvertures d'évacuation (27) dans l'espace intermédiaire des vitres (26).

17. Elément de fenêtre suivant l'une des revendications précédentes, caractérisé en ce que des cellules solaires (31) sont agencées sur le côté externe du châssis.

18. Elément de fenêtre suivant la revendication 17, caractérisé en ce que les cellules solaires (31) servent à l'alimentation du chauffage de fenêtres.

19. Elément de fenêtre suivant l'une des revendications précédentes, caractérisé en ce que sont prévus un dispositif électromécanique et une commande au moyen desquels la fenêtre peut être ouverte ou fermée.

20. Elément de fenêtre suivant la revendication 19, caractérisé en ce que la commande s'appuie sur des capteurs de température logés à l'extérieur et à l'intérieur du bâtiment ainsi que sur des valeurs allouées de confort qui peuvent être déterminées.

21. Elément de fenêtre suivant l'une des revendications 1 à 19, caractérisé en ce que la régulation du conditionnement d'air du bâtiment a lieu exclusivement au moyen du chauffage des vitres.
